# EUROPEAN PATENT APPLICATION

(11) **EP 0 848 534 A2**
(43) Date of publication of application: **17.06.1998**
(21) Application number: 97309710.8
(22) Date of filing: 02.12.1997
(51) Int. Cl.: H04M 1/72, H04Q 7/32

(54) **Communications adapter to link a control computer to a plurality of telephone sets**

(30) Priority: 16.12.1996 US 766122; 16.12.1996 US 766123; 16.12.1996 US 767045
(71) Applicant: NCR International, Inc., Dayton, Ohio 45479 (US)
(72) Inventor: Ratz, Roger W., Naperville, IL 60540 (US); Peters, Daniel V., Lisle, IL 60532 (US)
(74) Representative: Irish, Vivien Elizabeth

(57) **Abstract**

A personal computer interactive phone (PCIP) system links a control computer (141) and a plurality of telephone sets (104A, 104B.... 104N) that are connected to a telephone line (101). Each of the telephone sets is able to make or receive regular phone calls via the telephone line, and each of the telephone sets has an out-of-voice-band communication channel and an out-of-voice-band control channel. In such a configuration, audio signals can be transmitted between the control computer and each of the telephone sets via the communication channel without interfering with the regular phone calls on the telephone line. And control signals can be transmitted between the control computer and each of the telephone sets via the control channel without interfering with the regular phone calls on the telephone wires.

## Description

The present invention generally relates to a telephone communication system, and in particular, to an in-home (or small office) telephone communication system utilizing the capabilities in existing telephone equipment and existing phone wiring with the addition of a control computer, and relates to a communications adapter.

Increasingly, many homes may have one or more telephone wires and a modern PC with advanced features. With increasing performance needs and expectations on home telephone system, more and more consumers are demanding that the home telephone system have more intelligence and processing capabilities at an affordable price. Thus, applicant has realized there is a large market potential to use modern PC's processing power to provide home telephone system with advanced home telephony features, including:
(1) caller ID announcement based on caller ID record,
(2) voice activated auto-dial,
(3) PC resident message center access from any PCIP equipped phone,
(4) routing of incoming calls to specific phones in the home,
(5) in-house intercom with no additional wiring of the home,
(6) screening of incoming messages from any PCIP equipped phone,
(7) home convenience package including list maker and scheduler, and
(8) speech recognition by using the PCIP system.

Applicant has also realized that the feasibility to achieve such market potential greatly relies on an effective design of an integrated computer-telephone system:
(1) that has a low cost,
(2) that is flexible to form a specific telephone system for a household,
(3) that is adaptable to existing telecommunication technology,
(4) that is adaptable to consumer's existing telephone equipment and house wiring,
(5) that is simple to install, and
(6) that does not interfere with regular operation of existing home telephone system.

Applicant has further realized that the performance of the integrated computer-telephone system greatly depends on a design that can effectively link a control computer (typically a personal computer) with a plurality of telephone sets which are connected to a telephone line (or a communication channel), and that can effectively link any two of the telephone sets.

It is the object of the invention to provide circuitry that can link the control computer with a plurality of telephone sets, or can link two or more telephone sets.

According to the invention a communication adapter to connect a transmitting and receiving apparatus to a communication path, the adapter having a communication channel circuit for communication selectively to and from a like adapter connected in common to the communication path, a controller to generate control signals to control the said selective communication, a control channel circuit to send the control signals to and receive like control signals from a like adapter connected in common to the communication path, and an interface circuit to interface the communication channel circuit and the control channel circuit to the communication path.

The communication paths can comprise a telephone line or a wireless communication channel.

Also according to the invention communications apparatus comprising a first plurality of adapters each as claimed in any one of the preceding claims, the adapters each connecting a respective transmitting and receiving device to the communication path, and a further adapter connecting the system bus of a control computer to the communication path, the further adapter including a further communication channel circuit for communication from a system bus of the control computer to the communication path, a further controller to generate control signals to control the communication between the system bus and the communication path, a further control channel circuit to send the control signals to and receive control signals from the communication path, and a further interface circuit to interface the further communication channel circuit and the further control channel circuit to the communication path.

The invention will be described by way of example with reference to the accompanying drawings, in which:
Figure 1 is a block diagram of a PC interactive phone (PCIP) system, in accordance with the present invention;
Figure 2 shows house wiring of a telephone line and installation scheme for the PC interactive phone (PCIP) system shown in figure 1, in accordance with the present invention;
Figure 3A (consisting of figures 3B and 3C) shows the PC interactive phone (PCIP) system of figure 1 in greater detail, in accordance with the present invention;
Figure 3D (consisting of Figures 3E and 3F) shows an alternative to figure 3A;
Figure 4 shows the user panel of figure 3 in greater detail;
Figure 5 shows a PC computer that can be used to control the operation of the PCIP system of figure 1, in accordance with the present invention;
Figure 6 shows the programs stored in memory storage and disk storage in figure 5;
Figure 7 (consisting of figures 7A and 7B) shows a representative of the PCIP adapters shown in figure 3B, in greater detail; and
Figure 8 (consisting of figure 8A and 88) shows PCIPL board 142 shown in figure 3C, in greater detail.

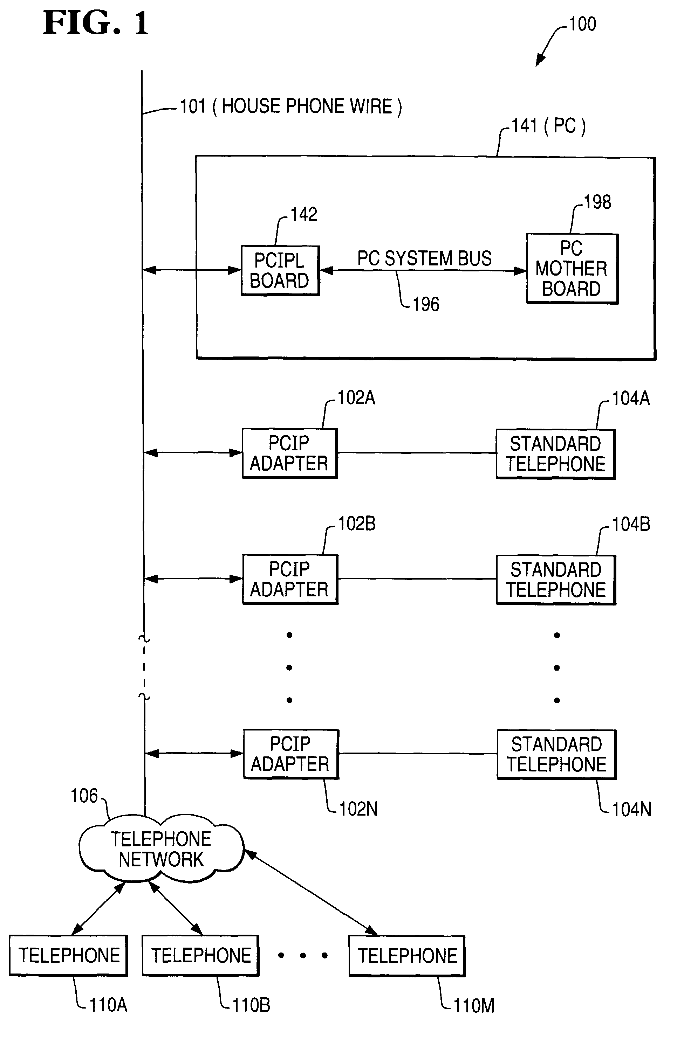

Referring to figure 1, there is shown a block diagram of a PC interactive phone (PCIP) system, in accordance with the present invention.

The PC interactive phone system includes a house telephone line 101, a PC 141, a plurality of telephone sets (identified as 104A, 104B, ..., 104N), and a plurality of PCIP adapters (identified as 102A, 102B, ..., 102N). Each of the telephone sets is coupled to its respective PCIP adapter (PCIPA). These telephone sets can be standard sets without any advanced features. Via telephone network 106, each of telephone sets 104A, 104B, ..., 104N can communicate with telephone sets 110A, 110B ..., or 110M.

As shown in figure 1, PC 141 includes a PC mother board 198 and an add-in PCIP link (PCIPL) board 142. Other detailed aspects of a typical PC are not described here because they are known in the art. PCIPL board 142 is coupled to PC mother board 198 via PC system bus 196. An example of a typical modern system bus is the PCI local bus. The PCIPL board and plurality of PCIP adapters are coupled to house telephone line 101.

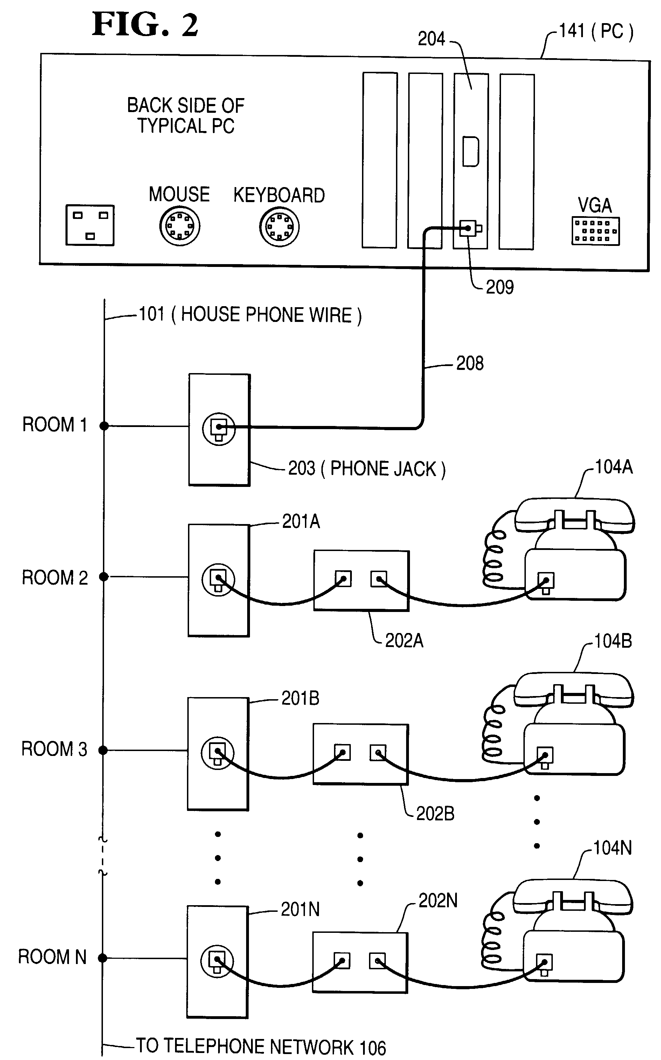

Referring to figure 2, there is shown house wiring of telephone line 101 and installation scheme for the PC interactive phone (PCIP) system shown in figure 1, in accordance with the present invention.

As shown in figure 2, PC 141 has a slot 142, generally allowing access for miscellaneous PC add-in boards, into which PCIPL board 142 is inserted. Telephone line 101 is wired into rooms 1-N, where telephone jacks 203, 201A, 201B, ..., 201N are installed respectively.

Via connector 209 and a connectorized telephone wire 208, PCIPL board 142 is coupled to telephone jack 203.

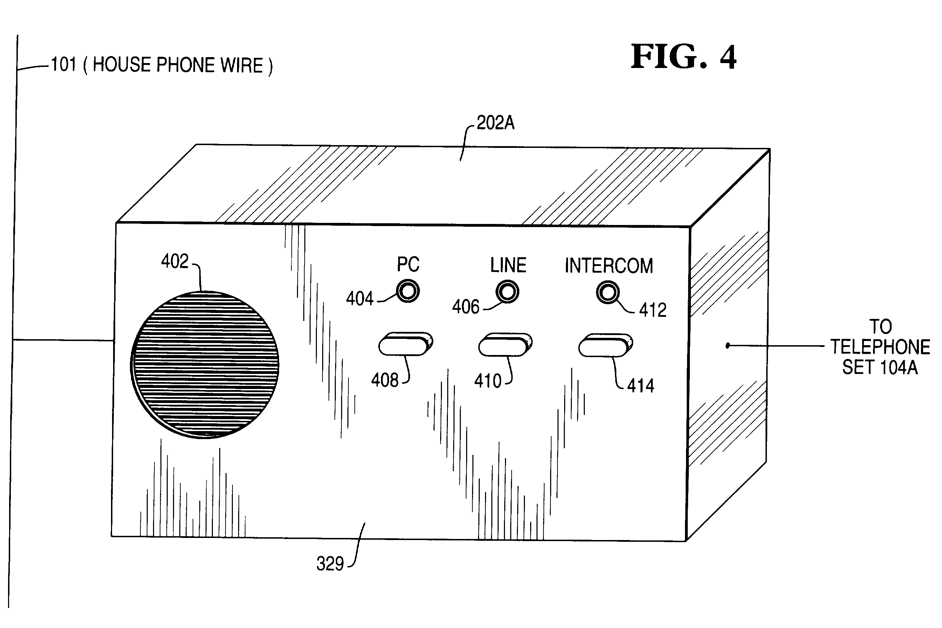

A plurality of adapter boxes (202A, 202B, ..., 202N) are coupled to telephone jacks 201A, 201B, ..., 201N, respectively. The telephone sets (104A, 104B, ..., 104N) are coupled to adapter boxes 202A, 202B, ..., 202N, respectively. Installed within adapter boxes 202A, 202B, ..., 202N are PCIP adapters 102A, 102B, ..., 102N, respectively. Each of the adapter boxes has a user panel which is depicted in figure 4 in greater detail.

To users, the system consists of just a few elements, some of which they would already have. Figure 2 shows how simply these elements are interconnected.

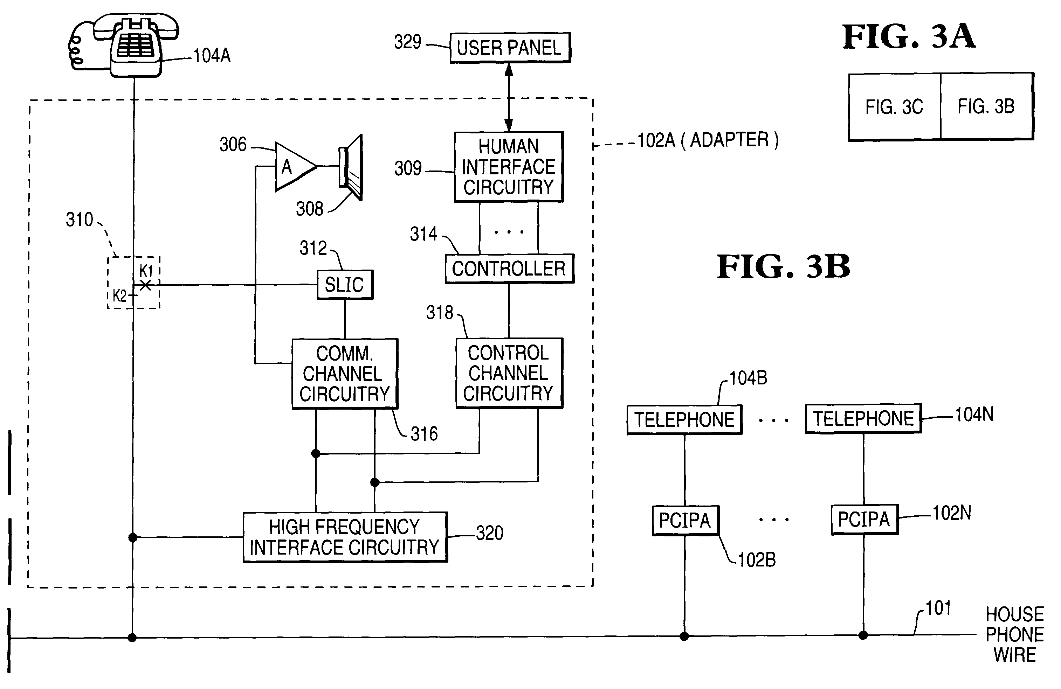

Referring to figure 3A (including 3B and 3C), there is shown an embodiment of the PC interactive phone (PCIP) system of figure 1 in greater detail.

Figure 3B shows the PCIP adapter 102A which includes an amplifier 306, a speaker 308, a human interface circuitry 309, a relay 310, a subscriber loop interface (SLIC) 312, a controller 314, communication channel circuitry 316, a control channel circuitry 318, and high frequency interface circuitry 320. Coupled to human interface circuitry 309 is a user panel 329.

Speaker 308, coupled to communication channel circuitry 316 via amplifier 106, is able to project audio to PCIP adapter locations in the home as needed by the PCIP system.

SLIC 312, coupled between communications channel circuitry 316 and telephone 104A via K1 switch located within relay 310, is able to power telephone set 104A, to detect off-hook condition for telephone set 104A, to adjust the proper bias and amplitude to send audio signal to and receive audio signal from telephone set 104A, to adjust the proper bias and amplitude to send audio signal to and receive audio signal from the communications channel circuitry 316, and to convert a 4-wire-send-and-receive signaling arrangement on the communications channel side to a 2-wire-send-and-receive signaling arrangement that is appropriate to a telephone set. The off-hook detect capability within the SLIC is used by the PCIP system to initiate a "listen" response whenever a telephone handset gets picked up. Modern SLIC circuits are highly integrated devices that can be purchased from a number of suppliers.

Relay 310 is able to connect telephone 104A either to the other PCIPA circuits, or to the telephone line by bypassing adapter 102A.

Human interface circuitry 309, coupled to controller 314, is able to generate currents to light the LEDs see Fig.4) on user panel 329 in response to control signals from controller 314, and to generate service request signals to controller 314 in response to activations of the function buttons (see Fig.4) user panel 329.

In adapter 102A, as one embodiment, communication channel circuitry 316, can include two high frequency communication channels: a high frequency transmitter and a high frequency receiver(neither being shown). The high frequency transmitter combines low frequency audio from SLIC 312 with a high frequency carrier that can be coupled onto the home telephone wires in a non-interfering manner using the high frequency interface circuitry 320. The high frequency receiver recovers low frequency audio from a high frequency carrier on the house telephone wires and sends it either to SLIC 312 or to speaker 306 and amplifier 308, depending on control signals communicated through controller 314. The two high frequency communication channels are mainly used as a full duplex audio (e.g., simultaneous audio transmission and reception) channel to another adapter, or to PC 141 (via the two communication channels located within PCIPL board 142). Depending on the various operating modes of the PCIP system, these two frequencies are reconfigurable to either transmitter or receiver functions under control of PCIPA controller 314.

Control channel circuitry 318 can encode and decode binary sequences using a third high frequency carrier (distinct from the two communication channels described in the previous paragraph). The control channel circuit is connected to controller 314 which facilitates a multi-point network using a single carrier frequency. Controller 314 has a networking port capable of transmitting and receiving Manchester encoded digital information, which eliminates the need for a separate clock signal. Controller 314 also uses a collision sensing and back-off algorithm that resolves contention for the network. The control channel frequency can be coupled onto the house telephone wires in a non-interfering manner using high frequency interface circuitry 320. The encode side of control channel circuit 318 converts a binary "1" and "0" sequence from controller 314 to a "carrier on" and "carrier off" sequence. The decode side of control channel 318 circuit converts a "carrier on" and "carrier off" sequence to a binary "1" and "0" sequence to be sent to controller 314.

High frequency interface circuitry 320 is able to couple high frequency carrier from circuitry's 316 and 318 to telephone line 101, without interfering with the normal audio band signal transmission on the telephone line. High frequency interface circuitry 320 can also receive high frequency signals from the telephone line.

Controller 314 is specialized for implementation of distributed sense and control networks. It includes a networking port, a configurable input/output port, and hardware and firmware that allow execution of simple programs for sense and control and communications protocols. The input/output port provides access to the human interface circuitry 309 and it controls various communications path options within the PCIPA circuit. For example, the input/output port is able to control the states of relay 310 (energized or un-energized), to generate signals to light the LEDs on user panel 329, to detect a button activation on user panel 329, to monitor the off-hook detect signal from the SLIC, and to switch the communication channel receiver output between speaker amplifier 306 and SLIC 312. The networking port that is integrated into controller 314 allows it to send and receive control commands from PC 141, for example, to send a service request to PC 141 after a specific button on user panel 329 has been activated. Specifically, the controller networks with the PC and other PCIPA controllers using data packets across the control channel. The Manchester encode and decode circuits that generate and sense the "1" and "0" bits are also integrated into the controller. Controller 314 also has a collision detect and back-off algorithm that resolves contention and allows multi-node access to the carrier. The specific device that currently suits this application is a Lon Works Neuron chip, MC143120 available from Motorola and Toshiba.

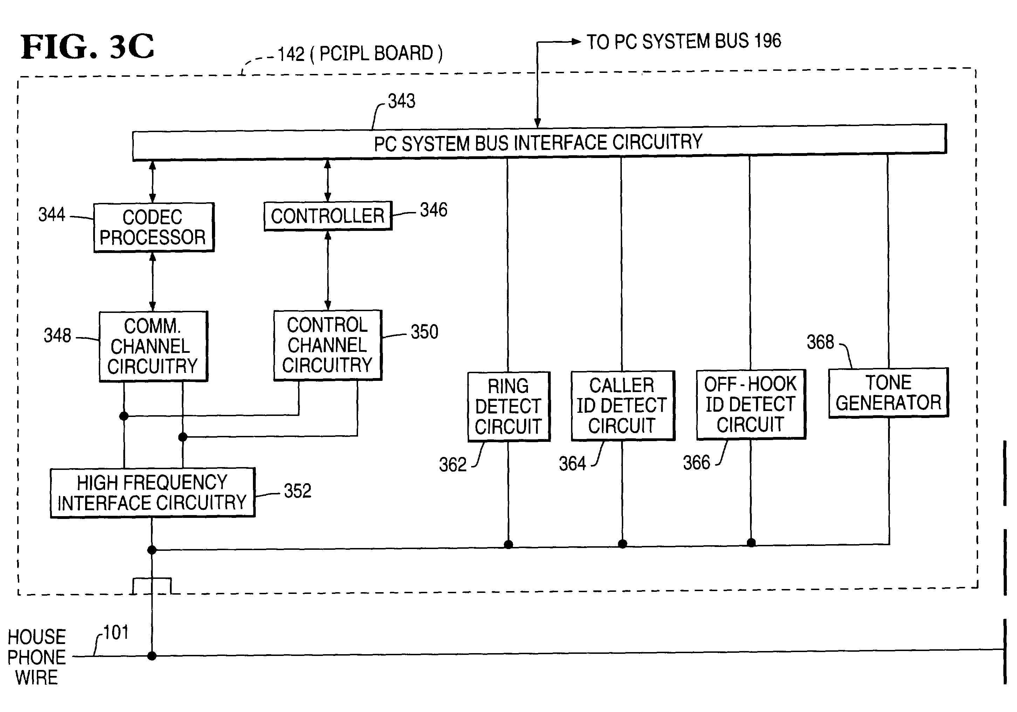

As shown in figure 3C, PCIPL board 142 includes PC system bus interface circuitry 343, a CODEC (coder/decoder) processor 344, controller 346, communication channel circuitry 348, control channel circuitry 350, high frequency interface circuitry 352, a ring detect circuit 362. Caller ID detect circuitry 364, an off-hook detect circuit 366, and tone generator 368.

PC system bus interface circuitry 343, coupled to PC system bus 196, is able to transmit signals between PC system bus 196 and the other circuitries on PCIPL board 142.

CODEC processor 344, coupled to PC system bus interface circuitry 343, is able to convert digitally encoded audio from PC system bus 196 to analog audio and send the converted digital audio to communication channel circuitry 348. It is also able to convert analog audio from communication channel circuitry 348 to digital audio and send the converted analog audio to PC 141.

Controller 346 has similar structure and function as controller 314 described for PCIP adapter 102A. It is specialized for implementation of distributed sense and control networks. It includes a networking port, a configurable input/output port, and hardware and firmware that allow execution of simple programs for sense and control and communications protocols. The input/output port in this case connects to PC system bus interface circuit 343 and provides a parallel port for communicating with the PC circuit. The controller 346 is coupled between PC system bus interface circuitry 343 and control channel circuitry 350, and is thus able to provide network access for the PC to generate control commands to, and interpret service requests and operational reports from, the adapters (102A, 102B, ..., 102N).

On PCIPL board 142, communication channel circuitry 348 has two high frequency communication channels, which are mainly used to flexibly establish full duplex audio channels between CODEC processor 344 and the PCIP adapters (102A, 102B, ..., 102N). Only one PCIP adapter will be allowed to transmit on either of the two communication channels at any time as controlled by PCIP control program 602. The function and structure of communication channel circuitry 348 are similar to those of communication channel 316 in the above-described PCIP adapter 102A.

Control channel circuitry 350 has one channel, which is mainly used to send control commands to, and receive service requests and operational reports from, the adapters (102A, 102B, ..., 102N). The function and structure of control channel circuitry 350 are similar to those of control channel circuitry 318 in the above-described PCIP adapter 102A.

High frequency interface circuitry 352, which connects communication channel circuitry 348 and control channel circuitry 350 to telephone line 101, is able to couple the high frequency carrier from circuitries 348 and 350 to the telephone line, without interfering with the normal audio band signal transmission on the telephone line. High frequency interface circuitry 352 can also receive high frequency signals from the telephone line.

Ring detect circuit 362 is able to detect ring currents on the telephone line.

Caller ID detect circuit 364 is able to detect caller's identification information (minimally, a caller's telephone number). This information is carried between first and second ring currents of an incoming call when caller ID service has been purchased from the local phone company.

Off-hook detect circuit 366 is able to detect a change in line impedance associated with off-hook condition. Three examples of off-hook condition are:
1. any of the non-PCIP equipped telephones connected to the telephone line has the handset lifted,
2. any of the PCIP equipped telephones has the handset lifted and the relay 310 has the phone connected to the house phone wires, or
3. any other equipment on the phone line such as a FAX or answering machine "picks up" a call.

Tone generator 368 is to able to convert a telephone number to be dialed from a computer based representation, such as binary, into DTMF (dual tone multifrequency) tones that can be superimposed onto the telephone line to affect autodialing. This circuit is related to PCIP capabilities other than Broadcast Caller ID and will not be discussed further here.

Ring detect circuit 362, Caller ID detect circuit 364, Off-hook detect circuit 366 are known to the person skilled in the art. Thus, they will not be described in greater detail. The functions of CODEC processor 344 and tone generator 368 can be flexibly programmed into various digital signal processors (DSPs) available in the industry, an example of which is DSP 1634 processor made by AT&T.

It should be noted that, in the embodiment shown in figure 3A, the three frequencies that are used to implement the communication and control channels in the PCIP system are out of the audio voice band and are in compliance with FCC rules, such that, the signaling of these three channels does not interfere with normal communication and signaling on a telephone network, even when PCIP and normal telephone activities are in progress simultaneously.

Preferably, 312.5 KHz and 357.1 KHz are used for two communication channels and 416.7 KHz for one control channel. These three specific frequencies are chosen because they are between 540 KHz (the bottom of the AM broadcast band) and 270 KHz (the lowest frequency that can be used for compliance to part 68 Federal Communication Commission). These three frequencies are also multiples of 10 MHz, which makes them easy to generate without RC or L tunables.

In the embodiment as shown in figure 3A, a communication channel between adapter 102A and PCIPL board 142 is formed by: PCIPA communication channel circuitry 316, PCIPA high frequency interface circuitry 320, house phone wire 101, PCIPL high frequency interface circuitry 352, PCIPL communication channel circuitry 348. A control channel between adapter 102A and PCIPL board 142 is formed by: PCIPA control channel circuitry 318, PCIPA high frequency interface circuitry 320, house phone wire 101, PCIPL high frequency interface circuitry 352, PCIPL control channel circuitry 350.

Unlike the conventional telephone communication system, the present invention uses two communication channels to achieve full duplex audio. In conventional telephone communication, one set of wires achieves full duplex audio by using a hybrid transformer that separates transmitting from receiving in a telephone set. However, the method used in the conventional telephone communication is not feasible when audio is modulated in an out of voice band carrier, because, if both ends of a communication channel used the same carrier, the result would be scrambled unrecoverable carrier.

In addition, unlike the conventional telephone communication system where a telephone office is usually either in audio transmission mode or in controlling mode (such as on-hook or off-hook signaling), the features provided by the adapters and PCIPL board 342 sometimes need to process audio transmission and control signals at the same time when multiple telephone sets connected to the telephone line are in use at the same time. Thus, in adapter 102A and PCIPL board 142, the communication channels are separated from the control channel.

In the embodiment shown in figure 3A, the existing house telephone wiring is used as transmission medium for the three high frequency channels between the adapter 102A and PCIPL board 142. However, other transmission media can be used to implement these three channels, such as wireless or power line carrier.

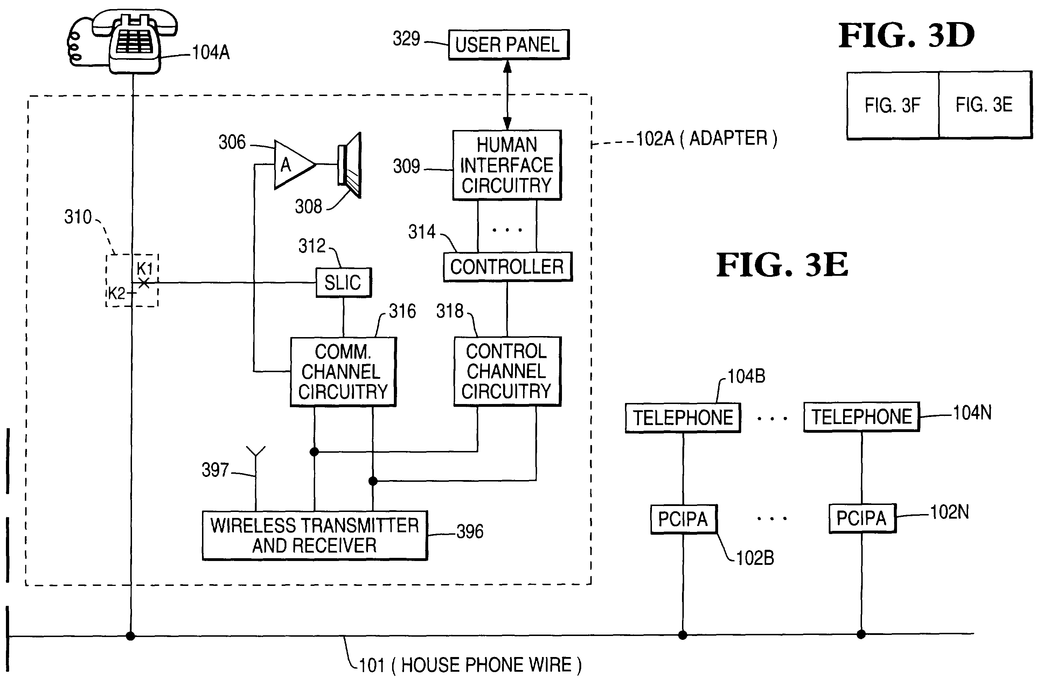

Referring to figure 3D (including 3E and 3F), there is shown another embodiment of the PC interactive phone (PCIP) system of figure 1 in greater detail, in accordance with the present invention.

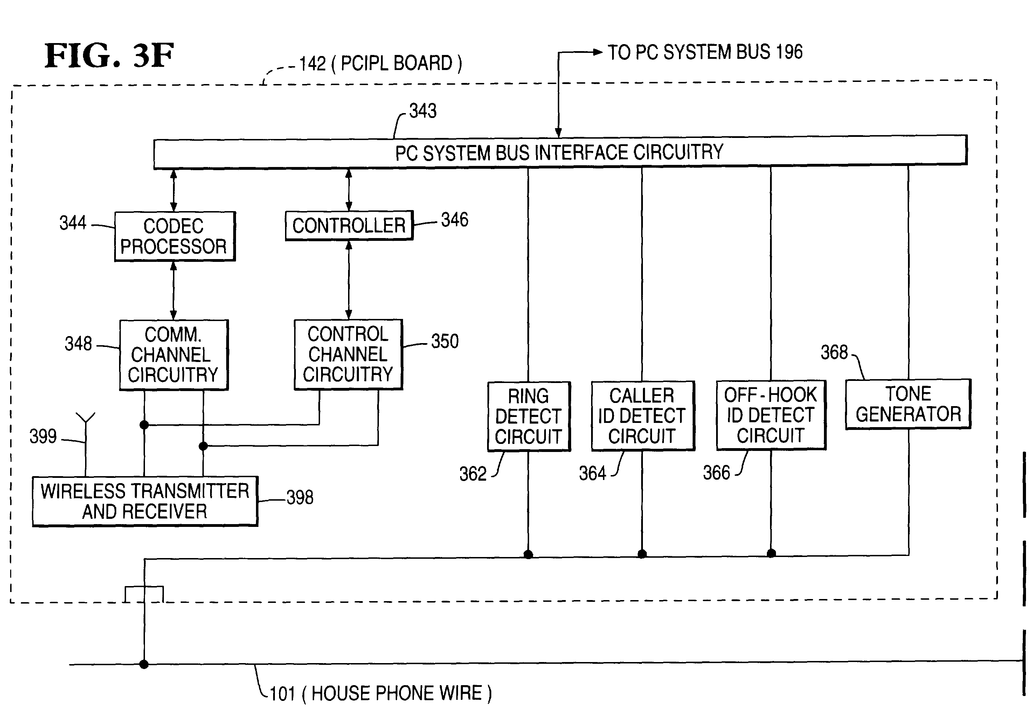

Figure 3E has the similar structure to that as shown in figure 3B, except that in figure 3E high frequency interface circuitry 320 of figure 3B is replaced by wireless communication interface circuitry 396, which includes an antenna 397. Figure 3F has the similar structure to that shown in figure 3C, except that in figure 3F high frequency interface circuitry 352 of figure 3B is replaced by wireless communication interface circuitry 398, which includes an antenna 399. Thus, in figure 3D, only PCIPA wireless communication interface circuitry 396 and PCIPL wireless communication interface circuitry 398 will be further described.

Wireless communication interface circuitry 396 (or 398) is able to implement a duplex communication link using two frequencies between any two PCIPAs or between one PCIPA and the PCIPL, and is able to implement a multipoint control channel on a third frequency. The communication link technology is common in the industry, as in cordless phone technology. However, specific control must be exerted to prevent more than one transmitter at a time on one frequency. The multi-point control link is implemented as a single frequency that is modulated "on" or "off" for Manchester encoded signaling by any of the PCIPL or PCIPA circuits. Multi-point networking is possible because each PCIPL and PCIPA circuit implements a collision detect and back-off algorithm as in the wired approach.

In the embodiment as shown in figure 3D, the communication between adapter 102A and PCIPL board 142 is through wireless carrier, instead of house telephone line 101. In figure 3D, a communication channel between adapter 102A and PCIPL board 142 is formed by: PCIPA communication channel circuitry 316, PCIPA wireless communication interface circuitry 396, PCIPL wireless communication interface circuitry 398, and PCIPL communication channel circuitry 348. A control channel between adapter 102A and PCIPL board 142 is formed by: PCIPA control channel circuitry 318, PCIPA wireless communication interface circuitry 396, PCIPL wireless communication interface circuitry 398, and PCIPL control channel circuitry 350. Like PCIP adapter 102A, each of the other PCIP adapters (102B, ..., 102N) also has a communication channel and a control channel to PCIPL board 142.

Referring to figure 4, there is shown user panel 329 (which is mounted on the front of adapter box 202A) in greater detail, in accordance with the present invention.

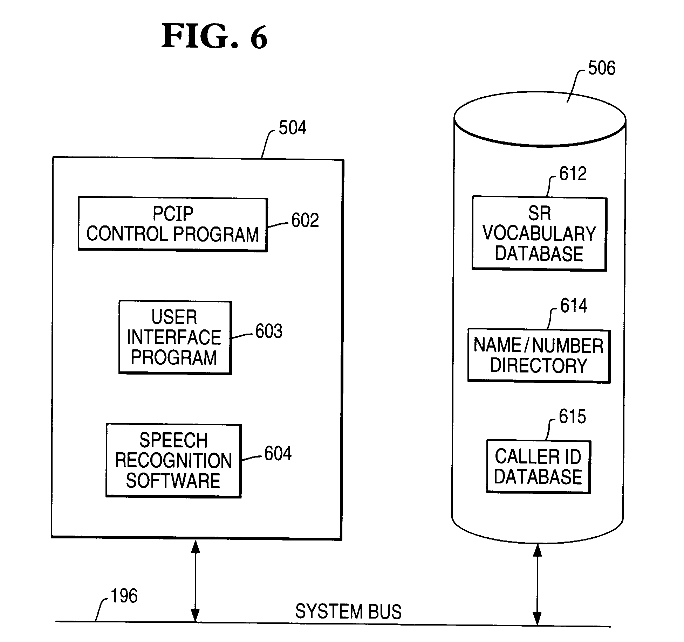

As shown in figure 4, user panel 329 includes a speaker opening 402, two LEDs (404, 406), and two buttons (408, 410). LED 404, which is associated with the label "PC" and button 408, indicates whether a communications link has been established between the attached telephone set and PCIP speech recognition software 604 (see figure 6) at PC 141, as would be the typical case after pressing button 408. LED 406, which is associated with the label "LINE" and button 410, indicates whether telephone set 104A is directly connected to telephone line 101, as would be the typical case after pressing button 410. LED 412, which is associated with the label "INTERCOM" and button 410, indicates whether the intercom feature can be used, as would be the typical case after pressing button 412.

In the idle state, PC 141 is on; PCIPL board 142 is active; and relay 310 connects telephone set 104A to SLIC 312; so that when picking up the handset of telephone set 104A, LED 404 typically turns on and a user can speak service request to PC 141 immediately without speaking over a dialtone sound. By pressing button 410, the user can over-ride the default condition, which causes relay 310 to connect telephone set 104A to the telephone line directly and enables the user to dial a telephone number manually. Relay 310 is controlled by PCIP control program 602 (see figure 6) and the firmware in controller 314, which are responsive to button pushes, off-hook conditions, system state, and resource availability, such as availability of the audio communication channels. Some functions of PCIP control program 602 are distributed such that some control is in the various PCIP adapters (e.g. 102A-N). If PC 141 is turned off or otherwise not responding, controller 314 will control relay 310 to directly connect telephone set 104A to telephone line 101.

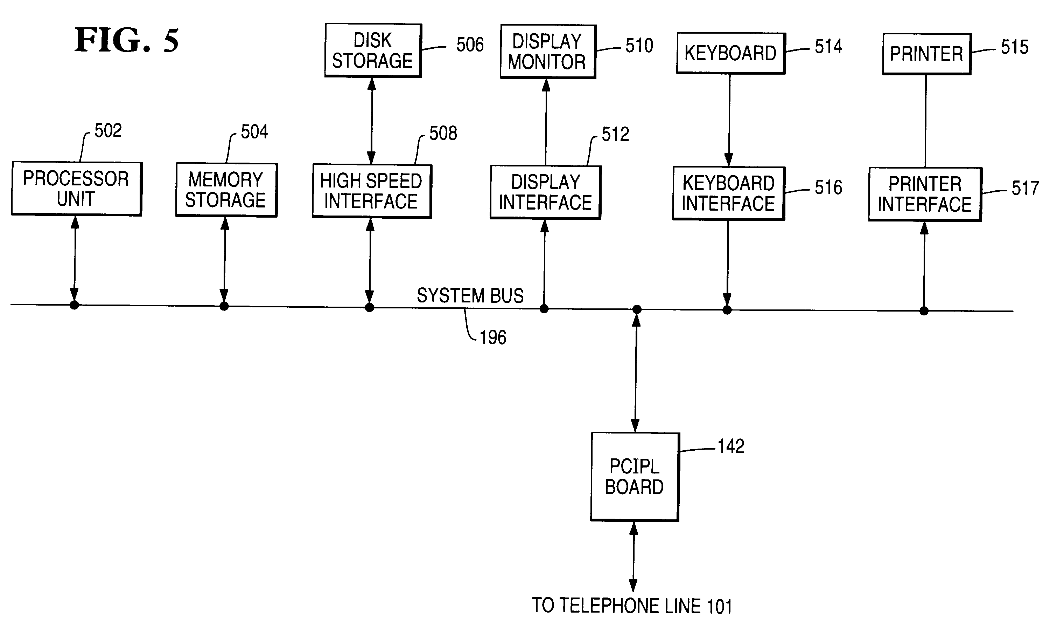

Referring to figure 5, there is shown PC 141 of figure 1 in greater detail, in accordance with the present invention.

As shown in figure 5, PC 141 includes a system bus 196, a processor unit 502, a memory storage 504, a disk storage 506, a high speed interface 508, a display monitor 510, a display interface 512, a keyboard 514, a keyboard interface 516, a printer 515, and a printer interface 517.

Memory storage 504, coupled to the system bus, is able to store programs that consist of instructions and data.

Disk storage 506, coupled to the system bus via high speed interface 508, is also able to store programs. However, disk storage 506 has larger memory size than memory storage 504, while memory storage 504 has faster access speed than disk storage 506. The programs stored in disk storage 506 can be down loaded to memory storage 504.

Processor unit 502, coupled to the system bus, has the access to both memory storage 504 and disk storage 506. To perform a specific task, the processor unit is able to execute the programs stored in memory storage 504. The processor unit is also able to control the over all operation of the PC computer.

Display monitor 510, coupled to the bus via display interface 512, is able to provide visual interface between a user and the PC computer.

Keyboard 514, coupled to the system bus via a keyboard interface 516, is able to provide alphabetical and numerical input to the PC computer system.

Printer 515, coupled the system bus via printer interface 517, is able to print out results.

Referring to figure 6, there is shown the executable programs stored in memory storage 504 during execution and the database files maintained in disk storage 506.

As shown in figure 6, executable programs stored in memory storage 504 include: PCIP control program 602, user interface program 603, and speech recognition software 604. Database files stored in disk storage 506 include: speech recognition (SR) vocabulary database 612, name/Number directory 614, and caller ID database 615.

PCIP control program 612 is able to maintain state information for the system and orchestrate responses to various stimuli. Stimuli include button pushes, off-hooks, ring detect, etc. Responses include initiating database lookups, and sending out control commands for establishing communication connections, etc. For example, if a PCIP adapter connected telephone has an off hook condition, control program 602 will be informed and it will send out commands on the control channel which will establish a communication channel. Furthermore, the control program will initiate speech recognition software 604 to "listen" to the appropriate communication channel. Specific examples are provided in the discussion of the flowcharts below.

Speech recognition (SR)software 604 is widely available. The PCIP system in the present invention does not require a particularly sophisticated capability.

SR Vocabulary database 612 contains the digital representation of audio clips (in this case, spoken words relating to commands and names) that can be interpreted by speech recognition software 604. These digital representations are frequently referred to as wavefiles. The use of wavefile formats is common in the industry.

User interface program 603 provides a human interface via PC's display monitor 510, keyboard 514 and mouse 515. It allows a user to install, configure, and customize his/her PCIP system. This is a typical capability for PC add-in software and hardware.

Name/Number directory 614 stores persons' names and associated telephone numbers.

Caller ID database 615 stores a caller's "signature" pattern recovered from the Caller ID information along with an announcement wavefile and call routing options and ring pattern options. The announcement wavefile is pre-recorded by the user, and stored in a digital format. The call routing options and ring pattern options are entered via user interface program 603.

The databases and data in disk storage 506 can be read into memory storage 504, updated in the memory storage 504, and written back to disk storage 506.

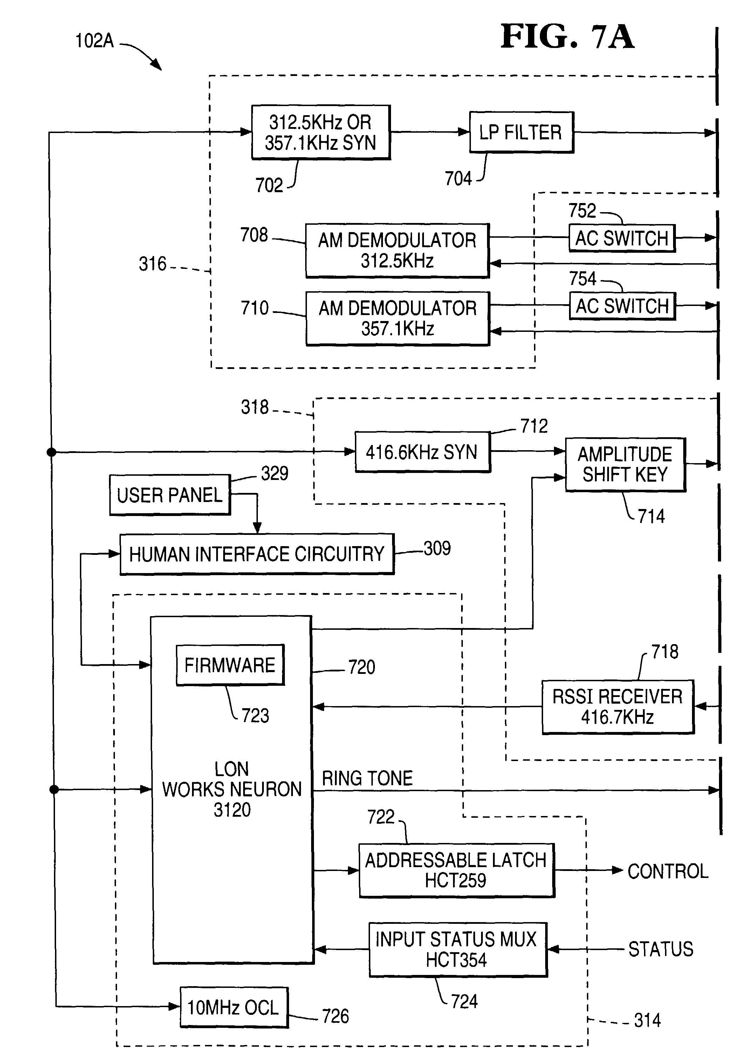

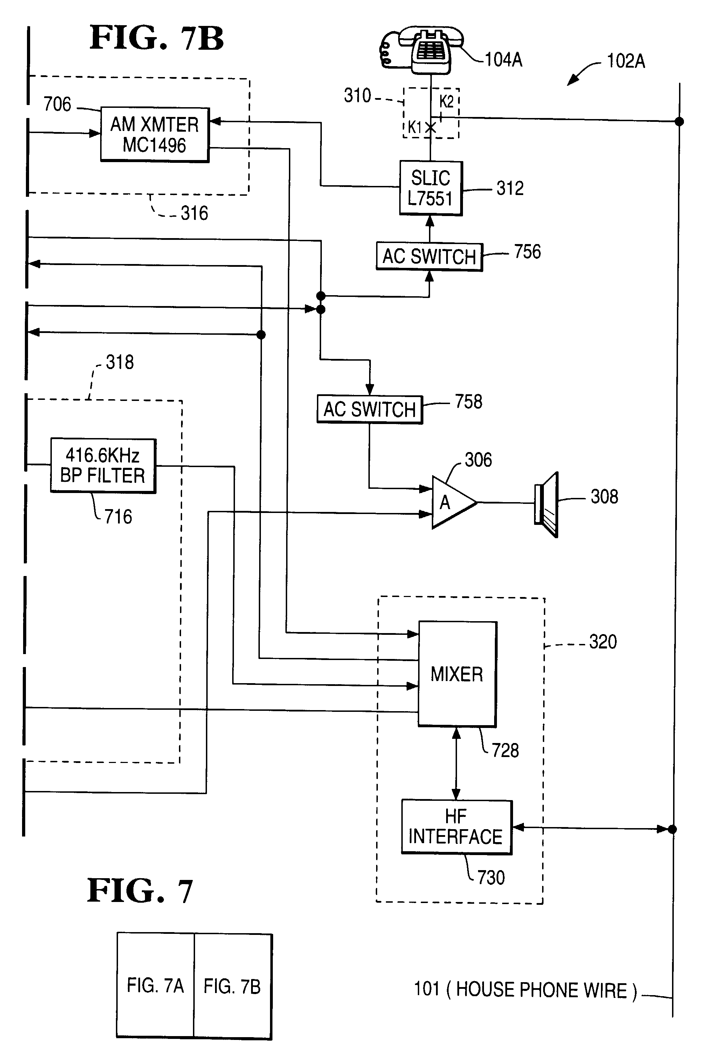

Referring to figure 7 (consisting of figures 7A and 7B), there is shown PCIP adapter 102A (see figure 3B), where the details for each of the function blocks of PCIP adapter 102A are delineated by dot lines, in accordance with one embodiment of the present invention.

As shown in figure 7, PCIP adapter 102A further includes four AC switches (752, 754, 756, and 758). AC switch 752 is able to switch on and off the output from AM demodulator 708, AC switch 754 is able to switch on and off the output from AM demodulator 710, AC switch 756 is able to switch on and off the input to SLIC 312, and AC switch 752 is able to switch on and off the input to amplifier 306. The function the four AC switches can be implemented by using 74HC/HCT4016 switches manufactured by Signetics or other equivalent devices.

As shown in figure 7A, PCIPA high frequency interface circuitry 320 includes a mixer 728 and an HF interface 730. Mixer 728 combines the high frequency signals received, and HF interface 230 connects them to telephone line 101.

PCIPA controller 314 includes a processor 720, an addressable latch 722, an input status MUX 724, and a 10MHz oscillator 726.

Processor 720 is able to decode the command signals received from RSSI receiver 718, and generate control signals accordingly to control the operations of PCIP adapter 102A. Processor 720 is also able to generate status signals for PCIP adapter 102A and telephone set 104A, and send the status signals to PCIPL board 142 via amplitude shifkey 714. Processor 720 is further able to generate request signals in response to the inputting signals from human interface circuitry 309, and send them to PCIPL board via amplitude shifkey 714.

As shown in figure 7, processor 720 can be a low cost controller and network interface chip, such as Lon Works Neuron 3120 made by Motorola or Toshiba. Since Lon Works Neuron 3120 has only four outputs and four inputs, addressable latch 722 is used to expand the four outputs into eight outputs, and input status mux 724 is used to expand the four inputs to eight inputs. Among the eight outputs of addressable latch 722, three are used to control the LEDs on user panel 329; two are used to control the relay (since two outputs are used, more than one relay could be used) in PCIP adapter 102A; two are used to control AM transmitter 706 (whether to transmit modulated signals), Am demodulators 708 and 710 (whether to demodulate received signals). The Am transmitter is stared by turning the modulation frequency on by using the carry input to counter 702 generating the modulation frequency and off by disabling counter 702. The outputs of AM demodulators 708 and 710 are gated to the desirable destinations by AC switches 752 and 754.

Among the eight inputs of status mux 724, three are used to receive the signals generated by the activations of the buttons on user panel 329; one is used to receive line off signal from SLIC 312; one is used to receive line off signal from telephone set 104A when the telephone set is dis-coupled from SLIC 312; the remaining three are unused. Integrated circuits HCT 259 and HCT354 made by Texas Instrument can be used to perform the functions of addressable latch 722 and input status mux 724 respectively. Lon Works Neuron 3120 chip contains firmware 723, which interprets commands from the control channel and scans human interface circuitry 309 for commands then executes them by writing a bit into the addressable latch or transmitting a command on the control channel. Lon Works Neuron 3120 chip has a unique identification (or address). When PCIP adapter 102A sends any signals to PCIPL board 142 (or PC 141), the unique identification is also sent to PCIPL board 142, so that (PCIPL board 142 (or PC 141) knows from which of the PCIPL adapters (102A, 102B, ..., or 102N) the signals have been sent. When PCIPL board 142 (or PC 141) sends any signals to any of the PCIPL adapters (102A, 102B, ..., or 102N), an identification for the Lon Works Neuron chip of the respective PCIP adapter is also sent with the signals. Even though all if the PCIP adapters (102A, 102B, ..., or 102N) receive the signal from PCIPL board 142 (or PC 141), only the PCIP adapter matching the identification acts upon the signals. Lon Works Neuron 3120 chip can recognize a broadcasting identification (or an broadcasting address), to identify and receive the information directed to all of the PCIP adapters in the PCIP system.

Oscillator 726 generates base frequency for counters 702 and 712, and provides clock for processor 720.

In the embodiment shown in figure 7, the function of SLIC 312 can be implemented by using L7551 manufactured by Seimens.

PCIPA communication channel circuitry 316 includes a frequency counter 702, an LP (low pass) filter 704, an AM (amplitude modulation) transmitter 706, a 312.5 kHz AM demodulator 708, and a 357.1 kHz AM demodulator 710.

In combination, frequency counter 702, LP filter 704 and AM mixer 206 are operative as an AM transmitter. Specifically, frequency counter 702 is able to receive 10 MHz and divide it down to 312.5 kHz or 357.1 kHz. LP filter 704 is able to receive the modulated frequency from frequency counter 702 and convert them into a sin wave. The embodiment of figure 7A can use MC1496 integrated circuit manufactured by Motorola to implement the function performed LP filter 704. AM transmitter 706 is able to receive the sin wave from LP filter 704 and audio from SLIC 312 and combine them into an AM modulated audio.

In combination, 312.5 kHz AM demodulator 708, and 357.1 kHz 312.5 kHz demodulator 710 are operative as an AM receiver. Specifically, AM demodulator 208 and 357.1 kHz AM demodulator 710 are able to receive audio from mixer 228, demodulate the audio and send it to SLIC 312. Two demodulators are used so that when in intercom mode either frequency can be used on either end.

PCIA control channel circuitry 318 includes a 416.6 kHz counter 712, an amplitude shift key 714, a 416.6 kHz LP filter 716, and RSSI (Received Signal Strength Indicator) 416.7 kHz receiver 718. In combination, 416.6 kHz counter 712, amplitude shift key 714 and 416.6 kHz LP filter 716 are operative as ASK (amplitude keyed shift) transmitter. Specifically, counter 712 is able to divide 10 MHz into 416.6 kHz and send the divided frequency to amplitude shift key 714. The carry input of counter 712 is used to key the ASK transmitter off and on. (The carry input, or "look ahead" carry, will stop and start the counter). After receiving control signal from processor 720, amplitude shift key 714 is able to convert the control signal into square wave form. 416.6 kHz BP (band pass) filter 716 is able to convert the square wave into sin wave form.

RSSI 416.7 kHz receiver 718 is able to demodulate the amplitude shift keying signal received from the control channel into digital format.

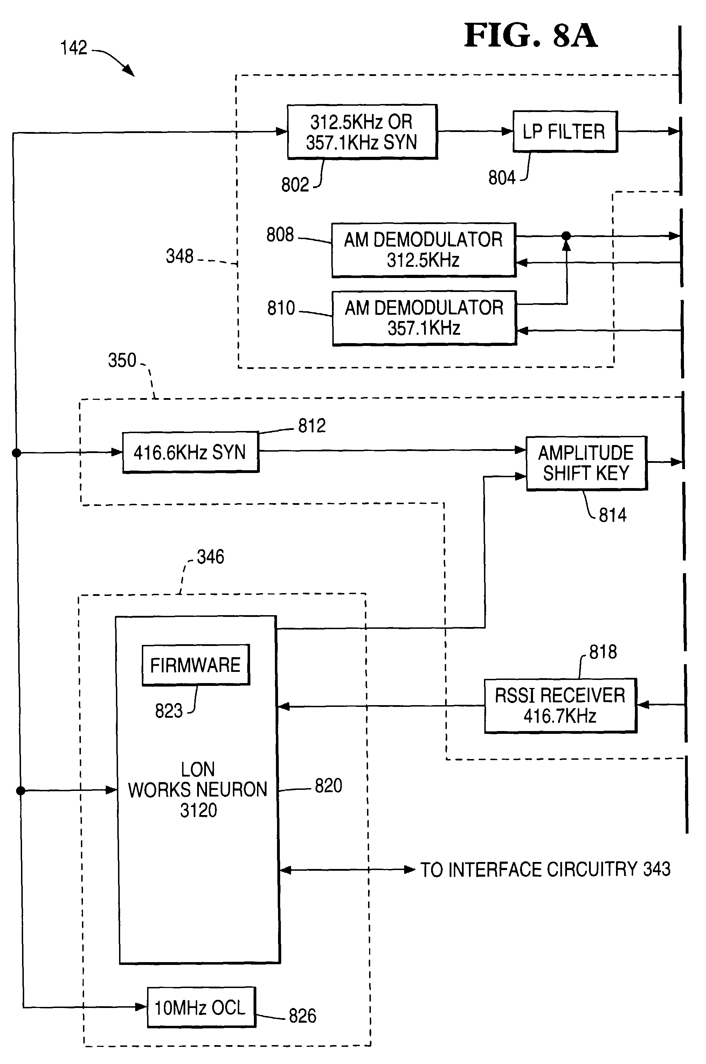

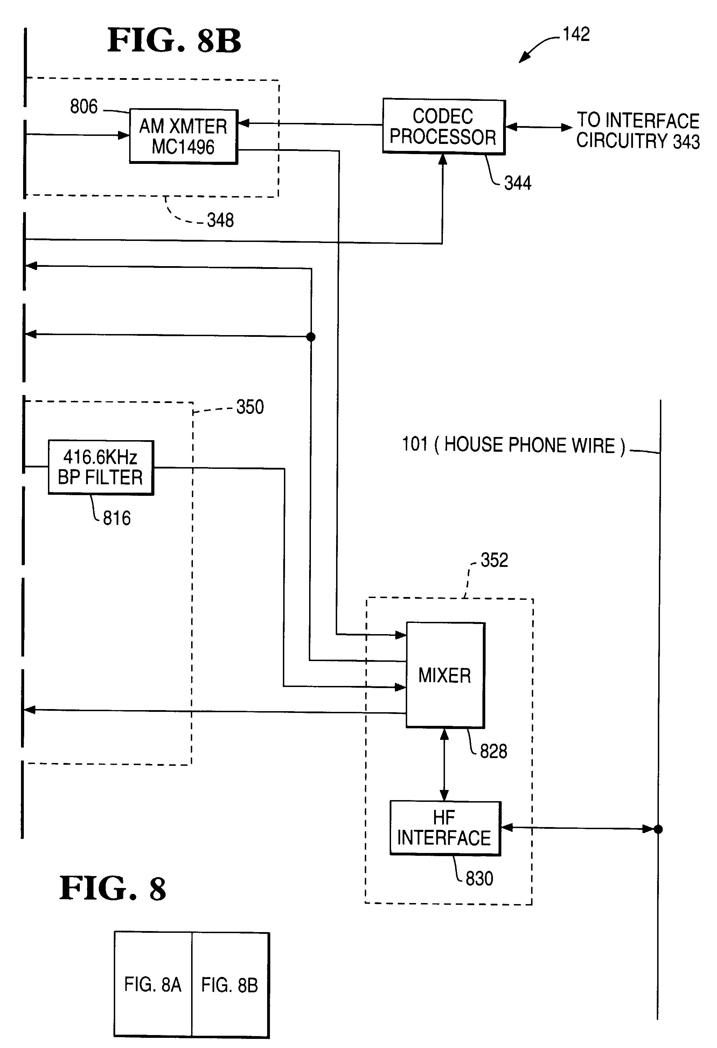

Referring to figure 8 (consisting of figures 8A and 8B), there is shown the block diagram of PCIPL board 142 (see figure 3C), where the details for each of the function blocks of PCIPL board 142 are delineated by dot lines, in accordance with one embodiment the present invention.

As shown in figure 8, PCIPL high frequency interface circuitry 352 includes a mixer 828 and an HF interface 830. Mixer 828 combines the high frequency signals received, and HF interface 230 connects the high frequency signals to telephone line 101.

PCIPL controller 346 includes a processor 820 and a 10MHz oscillator 826.

Processor 820 is able to decode command(s), received from PC system bus interface circuitry 343, into control signals, and sends the control signals to amplitude shift key 314. Processor 820 is able to receive the status signals and request signals, to decode these signals, and to send the decoded signals to PC 141 via PC system bus interface circuitry 343. Based on the status signals, PC 141 keeps tracking the operational conditions of all PCIP adapters (102A, 102B, ..., 102N) and all telephone sets (104A, 104B, ..., 104N).

As shown in figure 8A, processor 820 can be a low cost controller and network interface chip, such as Lon Works Neuron 3120 made by Motorola or Toshiba. Lon Works Neuron 3120 chip contains firmware 823, which is able to interprets commands from the control channel and PC system bus interface circuitry 342 and to executes them. As discussed above, Lon Works Neuron 3120 chip on PCIPL board 142 has a unique identification (or address).

PCIPL communication channel circuitry 348 includes a frequency counter 802, an LP (low pass) filter 804, an AM (amplitude modulation) transmitter 806, a 312.5 kHz AM demodulator 808, and a 357.1 kHz AM demodulator 810.

In combination, frequency counter 802, LP filter and AM mixer 806 are operative as an AM transmitter. Specifically, frequency counter 802 is able to receive 10 MHz and divide it down to 312.5 kHz or 357.1 kHz. LP filter 804 is able to receive the divided frequency from frequency counter 802 and convert it into a sin wave. AM transmitter 806 is able to receive the sin wave from LP filter 804 and signals from PC 141 (via CODEC processor 344) and combine them into an AM modulated Audio channel signal. The embodiment of figure 8B can use MC1496 integrated circuit manufactured by Motorola as the AM transmitter.

In combination, 312.5 kHz AM demodulator 808, and 357.1 kHz 312.5 kHz demodulator 810 are operative as an AM receiver. Specifically, 312.5 kHz AM demodulator 808 and 357.1 kHz AM demodulator 810 are able to receive modulated signals from mixer 828, demodulate the signals and send them to CODEC processor 344. Two demodulators are used because it is simpler and less costly to have two demodulators at two separate frequencies than to have one that can switch between two frequencies.

PCIPL control channel circuitry 350 includes a 416.6 kHz counter 812, an amplitude shift key 814, a 416.6 kHz LP filter 816, and RSSI 416.7 kHz receiver 818. In combination, 416.6 kHz counter 812, amplitude shift key 814 and 416.6 kHz LP filter 816 are operative as ASK (amplitude keyed shift) transmitter. Specifically, counter 812 is able to divide 10 MHz into 416.6 kHz and send the divided frequency to amplitude shift key 814. The carry input of counter 812 is used to key the ASK transmitter off and on. After receiving signals from processor 820, amplitude shift key 814 is able to convert the signals into square wave form. 416.6 kHz BP (band pass) filter 816 is able to convert the square wave into sin wave form.

RSSI (Received Signal Strength Indicator) 416.7 kHz receiver 818 is able to demodulate the amplitude shift keying signals received from the control channel into digital format.

It should be appreciated that, in the present invention, audio signals can be transmitted between the control computer and each of the PCIP adapters (102A, 102B, ..., 102N) via the communication channel without interfering the voice band signals on the telephone wires. And control signals can be transmitted between the control computer and each of each of the PCIP adapters (102A, 102B, ..., 102N) via the control channel without interfering the voice band signals on the telephone wires. In addition, the audio and control signals can be transmitted between two of the PCIP adapters (102A, 102B, ..., 102N) via a respective communication and control channels without interfering the voice band signals on the telephone wires.

It should be noted that the embodiments in the present invention are described in a home environment, they can be readily used in other environments within the scope of the present invention, such as a small office environment for example.

## Claims

1. A communication adapter (102A) to connect a transmitting and receiving apparatus (104) to a communication path (101), the adapter (102A) having a communication channel circuit (316) for communication selectively to and from a like adapter (102B) connected in common to the communication path, a controller (314) to generate control signals to control the said selective communication, a control channel circuit (318) to send the control signals to and receive like control signals from a like adapter connected in common to the communication path, and an interface circuit (320) to interface the communication channel circuit and the control channel circuit to the communication path.

2. An adapter as claimed in claim 1, in which the communication path to which the interface circuit (320) interfaces comprises a telephone line (101).

3. An adapter as claimed in claim 1, in which the communication path to which the interface circuit (396) interfaces comprises a wireless communication channel (397).

4. An adapter as claimed in claim 1, 2 or 3, wherein the adapter (102A) is a telephone communications adapter to connect a telephone transmitting and receiving apparatus (104A) to the communication path (101), switching means (310) being provided to switch the telephone transmitting and receiving apparatus selectively between the communications channel circuit and a telephone line connection.

5. An adapter as claimed in claim 4, wherein the switching means comprises a switch relay (310).

6. An adapter as claimed in claim 4 or claim 5, wherein the interface circuit (320) is adapted to interface with the same telephone line to which the switching means connects, the interface circuit providing an interface at frequencies outside the telephone audio band.

7. Communications apparatus comprising a first plurality of adapters (102A, 102B.... 102N) each as claimed in any one of the preceding claims, the adapters each connecting a respective transmitting and receiving device (104A, 104B 104N) to the communication path (101), and a further adapter (142) connecting the system bus (196) of a control computer (198) to the communication path, the further adapter including a further communication channel circuit for communication from a system bus of the control computer to the communication path, a further controller to generate control signals to control the communication between the system bus and the communication path, a further control channel circuit to send the control signals to and receive control signals from the communication path, and a further interface circuit to interface the further communication channel circuit and the further control channel circuit to the communication path.

8. Communications apparatus as claimed in claim 7, wherein the controller of each of the said first plurality of adapters is connected to a human interface circuit (309) which has input means (329) to enter input signals manually, the manually entered input signals being effective to select the control signals generated by the controller.
